# EUROPEAN PATENT APPLICATION

(11) **EP 1 241 490 A2**
(43) Date of publication of application: **18.09.2002**
(21) Application number: 02251725.4
(22) Date of filing: 12.03.2002
(51) Int. Cl.: G02B 5/30, G02B 5/18

(54) **Polarisers and mass-production method**

(30) Priority: 12.03.2001 GB 0106050
(71) Applicant: CSEM Centre Suisse d'Electronique et de Microtechnique SA, 2007 Neuchâtel (CH)
(72) Inventor: Gale, Michael T., 8907 Wettswil (CH); Soechtig, Jürgen, 8152 Opfikon (CH); Zchokke, Christian, 5034 Suhr (CH); Schnieper, Marc, 8003 Z-rich (CH)
(74) Representative: Goodman, Simon John Nye

(57) **Abstract**

A method of mass producing polarisers comprises designing by rigorous diffraction theory an optimised grating profile, replicating the profile in a polymer or other substrate, and slope evaporating a metal onto the substrate. The angle of slope evaporation, the metal, and the thickness of the metal are optimised for a given wavelength using rigorous diffraction theory.

The polariser may be coated with a protective coating, such as an acrylic based lacquer or Magnesium Fluoride (MgF₂). The optical effect of the coating is also taken into account in the design using rigorous diffraction theory.

## Description

The invention is relevant for the fabrication of polariser elements for applications in optical systems for areas such as telecommunications, flat panel and other liquid crystal displays, sensors, optical instruments and lasers.

### Prior Art

Control of the polarisation of transmitted light at visible and at near / mid infra-red (wavelength range of about 700 - 2000 nm) is an important issue in many optical systems. The most widespread sheet polarisers are of the 'Polaroid' type, and suffer from limitations in the wavelength range, transmission and in the temperature stability. The use of very fine surface structures with micrometer or sub micrometer feature size for realising specific optical properties is well known. Typical applications are anti-reflection behaviour [1] and wavelength control. The use of very fine metal gratings for realising polariser properties is also well known [2,3]. Fabrication techniques to date for sub-micrometer period gratings have been based upon high-resolution lithography (such as e-beam lithography) and etching technologies. Fabrication technology based on nano-printing has also been described [4], but only for polarisers operating in the reflection mode.

### Statement of the Invention

The invention provides a method for the mass production of polarisers and polarisers manufactured by such a method as defined in the appended independent claims. Preferred, advantageous or alternative features of the invention are set out in the dependent subclaims. In one aspect the present invention provides a technique for the fabrication of polariser elements based upon subwavelength (periodicity finer than the wavelength of operation) metal gratings, and gives an example of the optimised design for an infra-red polariser operating in the 600 - 900 nm wavelength regime. The polariser can also be designed for operation in the telecom wavelength bands of 1300 nm and 1550 nm, or for use at visible wavelengths. The technique is well suited to the low-cost mass production of transmissive polariser elements. By suitable choice of materials, the polariser can also exhibit an extended temperature operating range up to in excess of 300°C.

The polariser elements are fabricated by the slope evaporation of metal onto a replicated surface relief grating with a continuous-relief profile (such as a sinewave relief) and a periodicity finer than the wavelength of operation ('subwavelength' grating). This requires a new design and optimisation of the structure since prior-art structures of this type have been based upon rectangular metal grating profiles.

The above and other features and advantages of the invention will be apparent from the following description of embodiments of the invention, by way of example, with reference to the accompanying drawings, in which:
- **Figure 1:**: Illustrates the steps of the metal polariser fabrication,
- **Figure 2:**: An example of a simulation of an aluminium coated polariser optimised for NIR light (800 nm) with an acrylic-lacquer protection coating, as given in the example above,
- **Figure 3:**: Shows a polariser design using slope evaporation onto a sinusoidal grating profile,
- **Figure 4:**: Illustrates the result of optimising the replicated grating profile, and
- **Figure 5:**: Illustrates the effect of replacing the lacquer coating by a coating of Magnesium Fluoride.

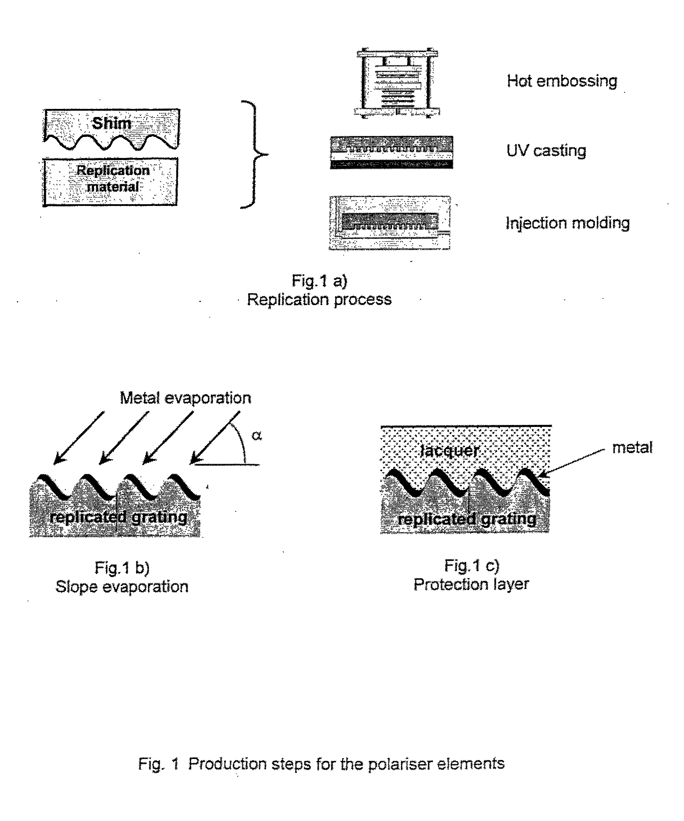

The basic technique is schematically illustrated in Figure 1 and consists of the following steps:
**a) Production of subwavelength grating microstructured substrates by replication technology:**
   Substrates with a subwavelength, continuous-relief grating surface microstructure are mass-produced in a polymer material using replication technology. For polarisers operating in the near infrared (NIR, 600- 1000 nm wavelength), the grating periodicity is typically in the range of 100 - 300 nm. The grating amplitude (relief depth) must be optimised for the subsequent evaporation process; it is typically in the range of 100 - 300 nm for near infra-red polarisers - a specific design is given below.
   Replication technologies such as hot embossing, UV-casting and injection moulding are suitable for low-cost production of such gratings [5]. The replication mould (shim) can be fabricated from an original microstructure using holographic lithography. Such replication technologies are capable of reproducing very high-resolution surface microstructure (feature sizes < 100 nm) at very low cots in volume. Typical materials are polymers such as polycarbonate and PMMA (polymethyl methacrylate).
   Other replication materials such as UV-curable polymers and sol-gel materials can also be used to achieve special properties such as improved hardness and high-temperature stability (suitable for use at temperatures of about or in excess of 200°C).
**b) Slope-evaporation of metal onto the microstructured substrate:**
   A specific metal is evaporated onto the substrate at a precise angle between the substrate and the impinging evaporated material. This metal grating, together with the surrounding non-metal material, then forms an optical microstructure with polarising properties in transmission (as well as reflection). The optimum metal depends upon the wavelength of use for the polariser. Typical metals for the wavelength range from 700 - 4000 nm are aluminium and gold. Examples and a specific design are given below. The slope evaporation angle (α in Figure 1 b) is chosen according to the polariser design - an example is also given below.
   The evaporation angle and the metal thickness strongly influence the TE and TM (Transverse Electric and Magnetic field vector) transmission values. The evaporation process requires a metal evaporation with good directionality such as that from thermal or e-beam evaporators with a small (mm-sized) effective source, so that it is possible to give a precise angle between the substrate with the grating and the evaporation beam (see Figure 1b). The evaporation rate and the total metal thickness on the grating can be measured by, for example, a calibrated quartz thicknesses monitor. Since the cross-section profile of the deposited metal is highly non-rectangular (in contrast to the prior-art), the amount and thickness of deposited metal must be optimised for wavelength of operation and the microstructure used - this is described in more detail below in the section 'Polariser Design'.
**c) Coating with protective lacquer:**
   A protection coating of a suitable lacquer is applied to the surface, for example by roller or spin coating. The coating serves to protect the metal against oxidation or degradation due to humidity or other environmental conditions, as well as to give a hard surface coating, which is scratch resistant and can be cleaned.
   Typical overcoating materials are acrylic-based materials, which can be applied in thicknesses in the range of 5 - 50 micrometers. For example, the protection coatings used in modern CD (Compact Disc) production are highly suited here.
   The optical properties of the overcoating material strongly affect the polarisation behaviour of the device. In general, the extinction ratio (TM/TE) for polarised light is reduced due to the presence of such protective coatings. This must be taken into account in the computations for device optimisation and the reduction can be largely compensated by a re-optimisation of the design.
   For applications in which the surface is not exposed to the environment or the degradation of the polariser over time is not an issue, the lacquer overcoating may be omitted.

### Polariser design:

The design of the polariser structure is performed using rigorous diffraction theory and takes into account the optical properties of the complete structure comprising the replicated polymer substrate, the deposited metal grating and the protective overcoat. In particular, the distribution and profile of the metal in the grating lines (c.f. Figures 1 b and 1c) as well as the protective lacquer must be taken into account in the computation. This optimisation is a non-obvious extension of the prior-art structures, which are essentially either fabricated by slope evaporation onto a sinusoidal grating relief or a grating relief not discussed in the prior art. The rigorous diffraction theory computation can be carried out using commercially available programs such as G-Solver, which have been determined to be sufficiently accurate for practical purposes.

It has been found that optimisation of the replicated grating relief in the polymer substrate has a major effect on the properties of the final polariser. The design approach takes the basic structure shown in Fig. 1c and optimises the replicated grating depth and profile and the angle α (see Fig. 1b) of the slope evaporation. The optimum relief profile has been found to be not sinusoidal, but a narrower, more rectangular-like profile. This results in a significant improvement in the polarizer extinction and transmission.

### Example 1

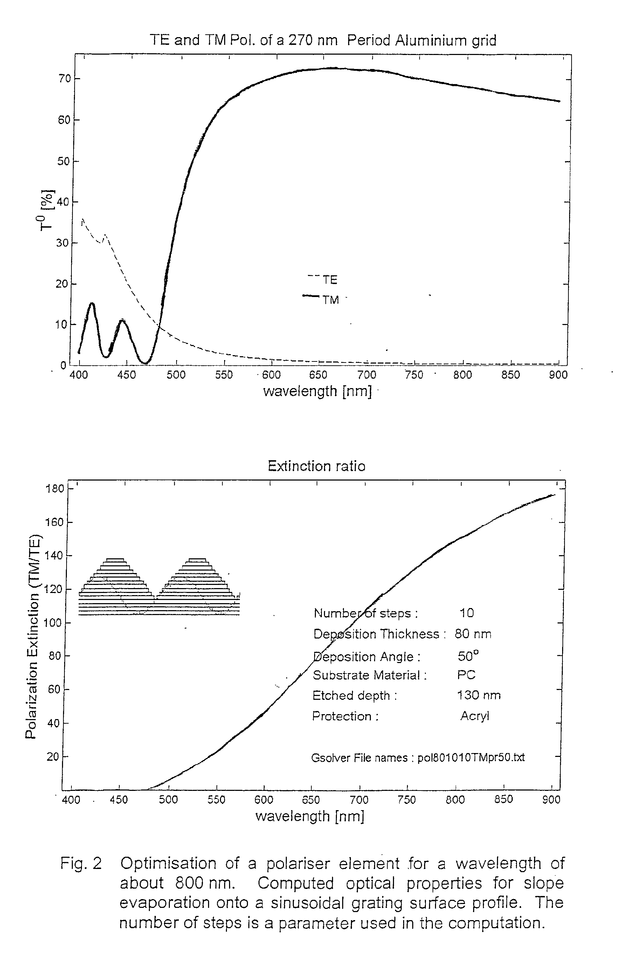

The following is an example of an optimised polariser of the type disclosed here, for the operating wavelength of about 800 nm. The polariser performance is shown in Fig.2.

| *Grating* /*Substrate:* | |
|---|---|
| Material | Polycarbonate (PC) |
| Period | 270 nm |
| Shape | Sinusoidal |
| Depth | 130 nm |

| *Slope evaporation:* | | |
|---|---|---|
| Material | Aluminium | |
| Angle α | 50° | |
| Thickness | 80 nm | (measured perpendicular to direction of impinging material) |

| *Protective overcoating:* | |
|---|---|
| Material | acrylic-based lacquer (standard CD overcoat lacquer) |

The optical characteristics obtained from the simulation at a wavelength of 800 nm are:

| | |
|---|---|
| TM polarisation transmission | > 67% |
| TE polarisation transmission | < 0.5% |
| Extinction ratio (TM/TE) | ∼ 160 |

### Example 2

Effect of optimisation of grating relief profile:

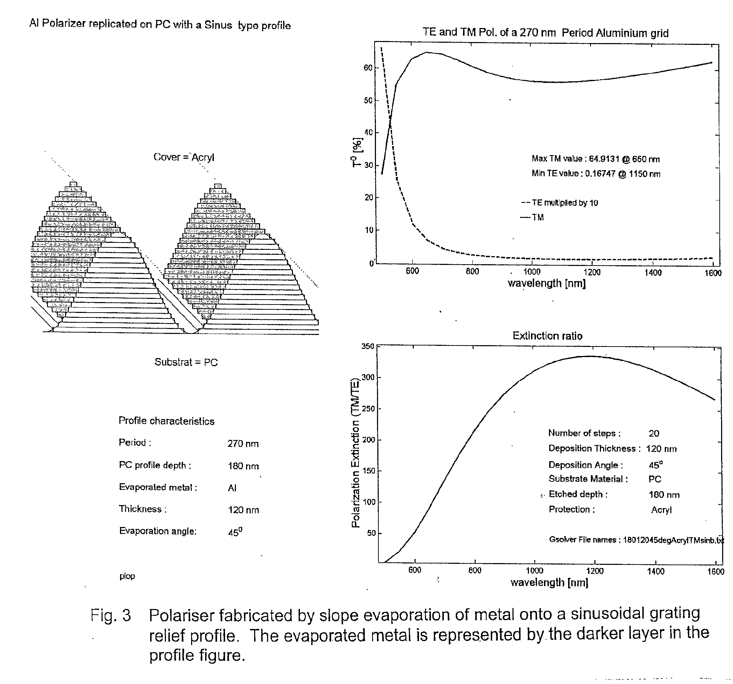

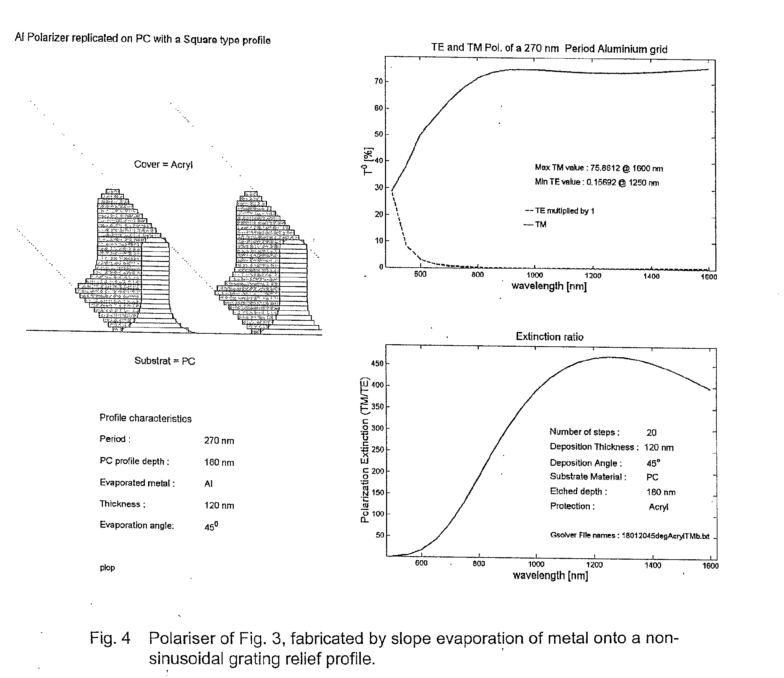

Figure 3 shows a polariser design using slope evaporation onto a sinusoidal grating profile. The computation is based on rigorous diffraction theory and takes into account the evaporated metal cross-section as evaporated onto the replicated grating profile, in this case sinusoidal, as well as the protective overcoat of an acrylic-based polymer. A maximum transmission TM of about 65% and an extinction ration TM / TE of about 340 over the wavelength range shown is achieved for an optimised metal thickness for this profile.

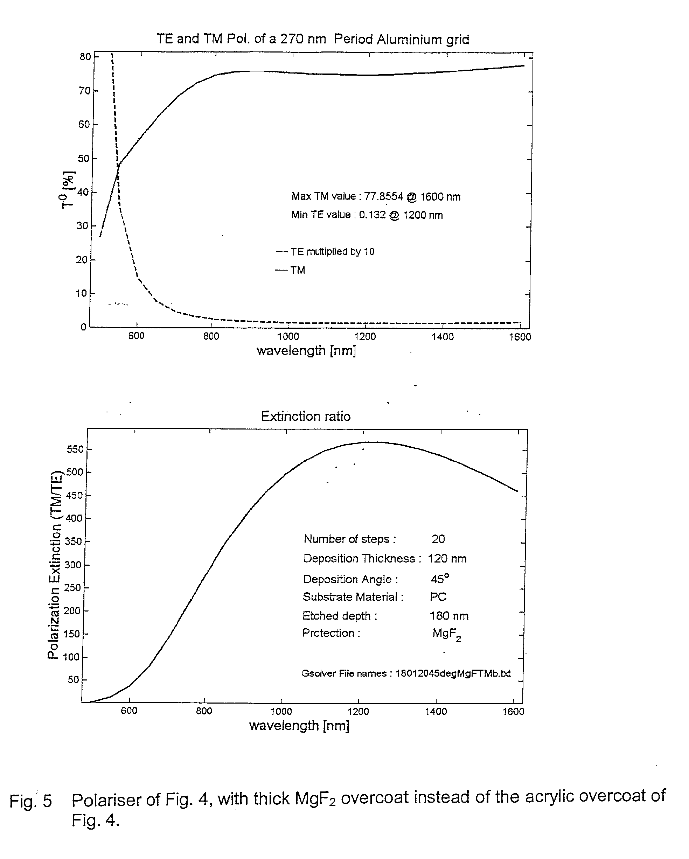

Figure 4 shows the result of optimising the replicated grating relief profile. The deposited metal cross-section is changed, resulting in a maximum transmission TM of about 76% and an extinction ration TM / TE in excess of 480, a significant improvement in the polariser performance.

A further improvement may be obtained by replacing the acrylic-based overcoat by an evaporated MgF₂ (Magnesium Fluoride) coating. As can be seen from Figure 5 the extinction ratio TM/ TE is increased to in excess of 550.

The above designs are intended as examples only - other similar designs can also be used. It is also possible to evaporate the metal from both sides of the grating relief, giving an improvement in polarisesr performance for some designs.

A further variation is the use of a replicated substrate material with a high temperature stability. For example, the use of a sol-gel material such as an optical OMMOCER® (registered trademark of the Fraunhofer-Gesellschaft in Germany), which can be used to replicate sub-micrometer linewidth gratings onto a glass or fused silica substrate and will withstand operating temperatures in excess of 200°C, together with a similar protective overcoat, leads to a polariser with high temperature performance which cannot be achieved with conventional polymer materials.

A method for the mass-production of transmissive, subwavelength, metal-grating polarisers for the visible, near and mid infrared wavelengths has been described. The polarisers are realised by the slope evaporation of a specific metal onto a substrate with microstructured surface, which has been optimised using rigorous diffraction theory, in the form of a subwavelength grating. The substrates can be mass-produced by high-resolution replication processes such as hot embossing or injection moulding. An additional surface protection layer may be used to give good wear, stability and lifetime properties; this protection layer prevents the oxidation of the subwavelength grating metal, and it also allows cleaning of the top surface. The optical effects of this optional surface protection layer are taken into account in the optimisation process using rigorous diffraction theory. By suitable choice of materials, polariser elements with an operating temperature range well above 100°C can also be realised. The structure and production method is well suited to low-cost, mass production of the polariser elements.
[1] C. Heine, R.H. Morf and M.T. Gale, "Coated submicron gratings for broadband antireflection in solar energy applications", J. Modern Optics, **43**, pp. 1371-1377 (1996).
[2] B. Stenkamp, M. Abraham, W. Ehrfeld, E. Knapek, M. Hintermaier, M.T. Gale and R. Morf, "Grid polarizer for the visible spectral region" Proc. SPIE 2213, 288-296, 1994.
[3] B. Schnabel, E.B. Kley and F. Wyrowski, "Study on polarizing visible light by subwavelength-period metal-stripe gratings", Optical Engineering 38(02), 220-226,1999.
[4] Z. Yu, P. Deshpande, W. Wu, J. Wang, S.Y. Chou, "Reflective polarizer based on a stacked double-layer subwavelength metal grating structure fabricated using nanoimprint lithography", Applied Physics Letters, **77**, no. 7, pp. 927-929 (2000).
[5] M.T. Gale, Replication, Ch. 6 in Micro-Optics Elements, systems and applications, H.P. Herzig, Ed., Taylor and Francis, London, 1997, ISBN 0 7484 0481 3 HB.

## Claims

1. A method for the mass production of sub-micrometer subwavelength polarisers, comprising the steps of;
i) designing by rigorous diffraction theory for sub-wavelength gratings an optimised grating profile,
ii) replicating the optimised surface profile in a polymer or other substrate, and
iii) slope evaporating a metal onto the substrate on to the substrate at a well defined angle to the surface, the metal and the thickness of the metal being optimised for a given wavelength by use of rigorous diffraction theory.

2. A method as claimed in Claim 1 in which the polariser is optimised for wavelengths typically used in optical communications, about 850, 1300, and 1550 nm.

3. A method as claimed in Claim 1 in which the polariser is optimised for use in display devices at visible wavelengths of about 400 to 700 nm.

4. A method as claimed in any of Claims 1 to 3 in which the polariser is a transmissive polariser.

5. A method as claimed in any of Claims 1 to 3 in which the polariser is a reflective polariser.

6. A method as claimed in any of Claims 1 to 5 in which the substrate is formed from a material that withstands temperatures in excess of 200°C.

7. A method as claimed in any of Claims 1 to 6 comprising the further step iv) of coating the surface of the polariser with a protective coating, the effect of the protective coating being taken into account in the application of rigorous diffraction theory.

8. A method as claimed in Claim 7 in which the coating is an acrylic based lacquer.

9. A method as claimed in Claim 7 in which the coating is Magnesium Fluoride (MgF₂).

10. A polariser manufactured by a method according to any preceding claim.
